**Europäisches Patentamt**

**European Patent Office**

**Office européen des brevets**

(19)

(11) Veröffentlichungsnummer: **0 303 883**
**B1**

(12) **EUROPÄISCHE PATENTSCHRIFT**

(45) Veröffentlichungstag der Patentschrift:
**21.03.90**

(51) Int. Cl.⁴: **B29C 67/22, C08J 9/34**

(21) Anmeldenummer: **88112490.3**

(22) Anmeldetag: **01.08.88**

(54) **Verfahren zum Herstellen von Schaumstoffpolstern aus mindestens zwei Schaumstoffen,insbesondere Polyurethan-Schaumstoffe, unterschiedlicher Elastizität bzw. Härte bildenden, fliessfähigen, entsprechend unterschiedlichen Reaktionsgemischen.**

(30) Priorität: **14.08.87 DE 3727129**

(43) Veröffentlichungstag der Anmeldung:
**22.02.89 Patentblatt 89/8**

(45) Bekanntmachung des Hinweises auf die Patenterteilung:
**21.03.90 Patentblatt 90/12**

(84) Benannte Vertragsstaaten:
**BE DE ES FR GB IT NL SE**

(56) Entgegenhaltungen:
**EP-A- 0 068 820**
**FR-A- 2 272 820**
**GB-A- 2 161 375**

(73) Patentinhaber: **BAYER AG,**
**D-5090 Leverkusen 1 Bayerwerk(DE)**

(72) Erfinder: **Brock, Martin, Dr., Silesiusstrasse 82,**
**D-5000 Koeln 80(DE)**
Erfinder: **Busch, Ralf, Dr., Schoenauer Strasse 1,**
**D-6834 Ketsch(DE)**
Erfinder: **Pohlig, Ralf, Dipl.-Ing., Immigrather Strasse 36,**
**D-5653 Leichlingen(DE)**

## Beschreibung

Die Erfindung betrifft ein Verfahren zum Herstellen von Schaumstoffpolstern aus mindestens zwei Schaumstoffe, insbesondere Polyurethan-Schaumstoffe, unterschiedlicher Elastizität bzw. Härte bildenden, fließfähigen, entsprechend unterschiedlichen Reaktionsgemischen, wobei in einen Formhohlraum ein erstes und zumindest ein weiteres Reaktionsgemisch eingebracht werden und zu einem Polster mit Zonen unterschiedlicher Elastizität bzw. Härte ausreagieren gelassen werden, bevor das Polster entformt wird.

Die Herstellung von Formteilen, insbesondere Polstern, durch Formverschäumung findet gegenüber dem früher gebräuchlichen Zuschneideverfahren immer mehr Verbreitung, weil es rationell und nahezu verlustfrei durchführbar ist. Dabei werden die Polster entweder hinterher mit einem Textilüberzug versehen oder ein in ein Vakuumformwerkzeug eingelegter Bezug wird direkt hinterschäumt.

Für die Herstellung von Formteilen mit Zonen unterschiedlicher Härte wurden schon die verschiedensten Verfahren vorgeschlagen:

Gemäß EP-B1-68 820 wird ein zweites Schaumgemisch direkt auf ein erstes Schaumgemisch zu einer Zeit entsprechend einer Volumenexpansion des ersten Gemisches von +100 % bis +2.300 % eingebracht, so daß eine oder mehrere relativ harte Zone(n) innerhalb eines relativ weichen Schaumes gebildet werden. Bei dieser Verfahrensweise bedarf es des Abwartens bis das erste Reaktionsgemisch die erforderliche Volumenausdehnung erreicht hat, bevor das zweite Reaktionsgemisch aufgegeben werden kann. Dadurch verlängern sich die Zykluszeiten bei der Formverschäumung in unerwünschter Weise. Zudem ist das eigentliche Ziel, nämlich härtere Zonen mit einer Schicht weichen Schaumstoffes zum Erhöhen des Sitzkomforts zu umhüllen, kaum erreichbar, weil die Ausdehnung der weichen Schicht in gewissen Zonen nur auf kleine Dicken beschränkt bleibt, welche die angestrebten Eigenschaften nur in unzureichender Weise vermitteln. Außerdem treten auch noch Schwierigkeiten hinsichtlich einer ausreichenden Reproduzierbarkeit dieser Umhüllungen auf.

Gemäß einem anderen Verfahren (US-A-4 190 697) wird zuerst eine härteren Schaum bildende Mischung in die Form eingebracht, wobei diese erste Mischung anschäumen gelassen wird und eine zweite, weicheren Schaum bildende Mischung eingebracht wird, nachdem die erste Mischung 10 bis 80% ihres vollen Aufschäumvolumens erreicht hat, beim Einbringen die erste Mischung durchdringt und diese zum Aufschwemmen bringt, wonach beide Mischungen ausreagieren und einen Polyurethan-Schaumstoffartikel mit Zonen unterschiedlicher Dichte bilden.

Bei diesem Verfahren ist von Nachteil, daß das Durchdringen und Unterfließen des zuerst eingebrachten Reaktionsgemisches unregelmäßig erfolgt, so daß keine Formteile mit ausreichend reproduzierbaren Eigenschaften, insbesondere hinsichtlich der Eindruckhärte, herstellbar sind.

Gemäß FR-A 2 272 820 werden mindestens zwei Polyurethan-Schaumstoff bildende Reaktionsgemische gleichzeitig in verschiedene Zonen des Formhohlraumes eingebracht, wonach das Aufschäumen erfolgt. Es ist nicht näher beschrieben, wie ein Zusammenfließen der verschiedenen leicht-fließenden Reaktionsgemische verhindert wird.

Gemäß EP-A 0 068 820 wird zuerst ein einen härteren Schaum bildendes Reaktionsgemisch eingebracht. Nachdem dieses Reaktionsgemisch in der Form partiell aufgeschäumt und angecremt ist, wird ein zweites, nicht angecremtes Gemisch eingebracht.

Nach GB-A 2 161 375 wird das erste, härtere Gemisch zunächst in der Form angecremt und partiell aufgeschäumt, bevor das zweite, einen weicheren Schaumstoff bildende Reaktionsgemisch eingeführt wird.

Keines dieser bekannten Verfahren gibt Hinweise, wie bei der Herstellung von stärker konturierten Polstern, beispielsweise Sitzpolstern mit Seitenwangen, vermieden wird, daß das in dem Bereich des Sitzspiegels aufgegebene Reaktionsgemisch in die Wangenbereiche des Formhohlraumes hinabläuft. In der Praxis hat man dies dadurch gelöst, daß am Formhohlraumboden Stege angeordnet sind, welche insbesondere das Fließen des dem Bereich des Sitzspiegels aufzugebenden Reaktionsgemisches begrenzen, damit Polster mit Zonen unterschiedlicher Härte reproduzierbar herstellbar sind. Derartige Stege verteuern natürlich das Formwerkzeug und hinterlassen im Polsterteil entsprechende Rillen, sogenannte "Pfeifen". Um sie einigermaßen zu kaschieren, werden am Bezug an dieser Stelle häufig Keder vorgesehen. Diese Rillen sind aber Schwachstellen, welche bei ungünstiger Belastung Ausgangsstellen für Risse bilden.

Es besteht die Aufgabe, ein Verfahren zu schaffen, mit welchem Schaumstoffpolster der eingangs genannten Art mit geringem Aufwand, insbesondere mit kürzeren Zykluszeiten, und mit verbesserter Reproduzierbarkeit herstellbar sind, die auch ungewöhnliche Belastungen vertragen.

Gelöst wird diese Aufgabe dadurch, daß eines der beiden Reaktionsgemische erst dann in den Formhohlraum eingebracht wird, wenn es einen angecremten, bereits zähflüssigen Zustand erlangt hat, und daß das zweite, nicht angecremte Reaktionsgemisch frühestens gleichzeitig eingebracht wird.

Dadurch wird erreicht, daß das angecremte Reaktionsgemisch beim Eintragen nicht mehr weit auseinanderfließt, sondern - wenn überhaupt noch - nur geringfügig, und daß seine weitere Raumverteilung in die Breite eher durch Aufschäumen als durch Fließen erfolgt und dabei dem nicht angecremten Reaktionsgemisch als Begrenzung dient. Insbesondere ermöglicht das neue Verfahren, den aus dem angecremten Reaktionsgemisch entstehenden Schaumstoff mit jenem aus dem nicht angecremten Reaktionsgemisch zu umkleiden, weil das nicht angecremte Reaktionsgemisch zum Zeitpunkt des Einbringens noch höhere Dichte aufweist und das angecremte Reaktionsgemisch aufschwimmen läßt.

Es versteht sich, daß auf größere Formhohlraumbereiche insbesondere das angecremte Reaktionsgemisch bereits mit der Eintragsvorrichtung vorverteilt werden muß. Dazu wird dieser Bereich während des Eintragens des Reaktionsgemisches mit der Gemischeintragsvorrichtung bzw, der Aufgabedüse abgefahren. Um die notwendige Verteilung zu erzielen, wählt man beispielsweise zeilenförmigen oder spiralförmigen Eintrag oder punktförmiges Eintragen auf mehrere Stellen des betreffenden Bereiches. Das Einbringen eines bereits angecremten Reaktionsgemisches verkürzt die Zykluszeiten.

Mit dem neuen Verfahren lassen sich in besonders vorteilhafter Weise Polster mit mehr als zwei unterschiedlichen Schaumstoffen herstellen, wozu die unterschiedlichen Reaktionsgemische, gegebenenfalls auch mehr als ein angecremtes, nebeneinander, insbesondere in Form von geraden oder gekrümmten Zeilen, eingebracht werden. Auch ein punktförmiges Eintragen der verschiedenen Reaktionsgemische, insbesondere mit unterschiedlichen Mengen, nach einem sinnvollen, dem optimalen Sitzkomfort entsprechenden Schema ist möglich. In jedem Falle muß der Ancremzustand, d.h. die Zähigkeit, im Augenblick des Einbringens auf die noch erforderlichen Fließwege abgestimmt sein. Dies läßt sich am besten durch Versuche empirisch ermitteln.

Es hat sich als besonders vorteilhaft erwiesen, wenn das angecremte Reaktionsgemisch beim Einbringen in den Formhohlraum bereits eine Reduzierung seiner Dichte um mindestens 2/3 erfahren hat.

Hält man sich an diesen Mindestwert, ist einigermaßen sichergestellt, daß kein übermäßiges Fließen des Reaktionsgemisches auftritt. Die Dichte ist Maßstab für die Viskosität und läßt sich bei einem noch nicht ausreagierten Gemisch grob, aber ausreichend bestimmen. Diejenige des angecremten Gemisches läßt sich an der Volumenzunahme abschätzen.

Wird das neue Verfahren zum Herstellen von Sitzpolstern mit seitlichen Wangen angewendet, wie sie bei Fahrzeugsitzen üblich sind, so wird das angecremte Reaktionsgemisch in die den Wangen entsprechenden Bereiche und das nicht angecremte Gemisch in den dem Sitzspiegel entsprechenden Bereich eingebracht.

Dadurch wird erreicht, daß das schwerere, nicht angecremte Reaktionsgemisch vom Sitzspiegelbereich herab in die Wangenbereiche fließt, dabei das leichtere, angecremte Reaktionsgemisch unterläuft, so daß der aus letzterem resultierende, härtere Schaumstoff nach dem Aufschäumen vom weicheren umhüllt ist.

## Beispiel

Zu fertigen ist ein Sitzpolster für Kraftfahrzeuge mit einem Sitzspiegel aus Weichschaumstoff geringerer Härte und seitlichen Wangen aus Weichschaumstoff größerer Härte durch Hinterschäumen eines Bezugstoffzuschnittes.

Verwendet werden zwei Kaltschaumstoff-Rezepturen.

Das erste, den weicheren Schaumstoff bildende, für den Sitzspiegelbereich bestimmte Reaktionsgemisch besitzt folgende Rezeptur:

### Komponente A

100 Gew.-Teile Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30;
3,1 Gew.-Teile Wasser;
0,2 Gew.-Teile Bis-Dimethylaminoethylether;
0,4 Gew.-Teile handelsüblicher Schaumstabilisator, bestehend aus einer Mischung niedermolekularer Siloxane
(Stabilisator KS 43 der Bayer AG, Leverkusen, BRD);
0,8 Gew.-Teile Triethylendiamin (33 %ig in Dipropylenglykol).

### Komponente B

45,3 Gew.-Teile eines Isocyanates der Kennzahl 85 mit ca. 65 Gew.-% 4,4'-Diphenylmethan-diisocyanat und ca. 20 Gew.-% 2,4'-Diphenylmethandiisocyanat und ca. 15 Gew.-% polymerem MDI bei einem NCO-Gehalt von ca. 32,5 %.

Das zweite, den härteren Schaumstoff bildende, für die Wangenbereiche bestimmte Reaktionsgemisch besitzt folgende Rezeptur:

### Komponente A

100 Gew.-Teile Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30;
3,1 Gew.-Teile Wasser;
0,2 Gew.-Teile Bis-Dimethylaminoethylether;
0,4 Gew.-Teile handelsüblicher Schaumstabilisator, bestehend aus einer Mischung niedermolekularer Siloxane
(Stabilisator KS 43 der Bayer AG, Leverkusen, BRD);
0,8 Gew.-Teile Triethylendiamin (33 %ig in Dipropylenglykol);
4,0 Gew.-Teile des Adduktes von $CO_2$ an N-Methylethanolamin.

### Komponente B

70,6 Gew.-Teile eines Isocyanates der Kennzahl 110 mit ca. 65 Gew.-% 4,4'-Diphenylmethan-diisocyanat und ca. 20 Gew.-% 2,4'-Diphenylmethandiisocyanat und ca. 15 Gew.-% polymerem MDI bei einem NCO-Gehalt von ca. 32,5 %.

Der Bezugsstoffzuschnitt wird formgetreu an die Wandung des Formhohlraumes eines Vakuumformwerkzeuges angelegt und anschließend gleichzeitig das Schaumstoff geringerer Härte (Stauchhärte nach DIN 53 577 von 3,3 kPa) bildende Reaktionsgemisch dem Bereich des Sitzspiegels des Formhohlraumes sowie das Schaumstoff größerer Härte (Stauchhärte nach DIN 53 577 von 7,3 kPa) bildende Reaktionsgemisch den Bereichen der Wangen aufgegeben.

Das für den Sitzspiegel bestimmte, angecremte Reaktionsgemisch besitzt beim Eintragen eine Dichte von etwa 0,3 kg/dm³ und wird in drei Zeilen im Bereich des Sitzspiegels aufgetragen, wobei eine Zeile mittig aufgebracht wird, während die anderen Zeilen jeweils im Abstand von 5 cm vom Rand der Wangenbereiche entfernt abgelegt werden. Das andere, nicht angecremte Reaktionsgemisch wird gleichzeitig jeweils in die Wangenbereiche des Formhohlraumes eingegeben. Das nicht angecremte Reaktionsgemisch, welches zum Zeitpunkt des Einbringens schwerer ist (Dichte 0,9 kg/dm³) als das angecremte, unterfließt das angecremte, wodurch ein Sitzpolster entsteht, dessen Wangenzonen einen härteren Schaumstoffkern mit weicherer Umhüllung aufweisen.

## Patentansprüche

1. Verfahren zum Herstellen von Schaumstoffpolstern aus mindestens zwei Schaumstoffe, insbesondere Polyurethan-Schaumstoffe, unterschiedlicher Elastizität bzw. Härte bildenden, fließfähigen, entsprechend unterschiedlichen Reaktionsgemischen, wobei in einen Formhohlraum ein erstes und zumindest ein weiteres Reaktionsgemisch eingebracht werden un zu einem Polster mit Zonen unterschiedlicher Elastizität bzw. Härte ausreagieren gelassen werden, bevor das Polster entformt wird, dadurch gekennzeichnet, daß eines der beiden Reaktionsgemische erst dann in den Formhohlraum eingebracht wird, wenn es einen angecremten, bereits zähflüssigen Zustand erlangt hat, und daß das zweite, nicht angecremte Reaktionsgemisch frühestens gleichzeitig eingebracht wird.

2. Verfahren nach Anspruch 1, dadurch gekennzeichnet, daß das angecremte Reaktionsgemisch beim Einbringen in den Formhohlraum bereits eine Reduzierung der Dichte um mindestens 2/3 erfahren hat.

3. Verfahren nach einem der Ansprüche 1 oder 2 zum Herstellen von Sitzpolstern mit seitlichen Wangen, dadurch gekennzeichnet, daß das angecremte Reaktionsgemisch in die den Wangen entsprechenden Bereiche und das nicht angecremte Gemisch in den dem Sitzspiegel entsprechenden Bereich eingebracht wird.

## Claims

1. A process for the production of foam cushions from at least two flowable, different reaction mixtures forming foams, particularly polyurethane foams, of correspondingly different elasticity or hardness, a first reaction mixture and at least one ohter reaction mixture being introduced into a mold cavity where they are left to react out to form a cushion having zones of different elasticity of hardness before the cushion is demolded, characterized in that one of the two reaction mixtures is only introduced into the mold cavity when it has acquired a creamed, already viscous consistency and in that the second, non-creamed reaction mixture is introduced at the earliest at the same time.

2. A process as claimed in claim 1, characterized in that the creamed reaction mixture has already undergone a reduction in density of at least 2/3 by the time it is introduced into the mold cavity.

3. A process as claimed in claim 1 or 2 for the production of seat cushions with side pieces, characterized in that the creamed reaction mixture is introduced into the regions corresponding to the side pieces while the non-creamed mixture is introduced into the region corresponding to the sitting level.

## Revendications

1. Procédé de fabrication de rembourrages en mousse à partir d'au moins deux mélanges réactionnels différents susceptibles de couler, formant des mousses, en particulier des mousses de polyuréthane, d'élasticités ou de duretés différentes, un premier et au moins un autre mélange réactionnel étant appliqués dans la cavité d'un moule et étant mis à réagir pour former un rembourrage avec des zones d'élasticités ou de duretés différentes, avant que le rembourrage ne soit démoulé, caractérisé en ce que l'un des deux mélanges réactionnels n'est appliqué dans la cavité du moule que lorsqu'il a atteint un état coagulé déjà visqueux, et en ce que le deuxième mélange réactionnel non coagulé est appliqué au plus tôt simultanément.

2. Procédé selon la revendication 1, caractérisé en ce que le mélange réactionnel coagulé a déjà subit une réduction de densité d'au moins 2/3 lors de l'application dans la cavité du moule.

3. Procédé selon l'une des revendications 1 ou 2, pour fabriquer des rembourrages de siège à joues latérales, caractérisé en ce que le mélange réactionnel coagulé est appliqué dans les zones correspondant aux joues et en ce que le mélange non coagulé est appliqué dans la zone correspondant au siège proprement dit.